# EUROPEAN PATENT SPECIFICATION

(11) **EP 2 437 587 B1**
(45) Date of publication and mention of the grant of the patent: **04.10.2017**
(21) Application number: 09845608.0
(22) Date of filing: 03.06.2009
(51) Int. Cl.: A01D 34/90, A01G 3/08, A45F 3/14, F16M 13/04

(54) **CLEARING SAW**
DURCHFORSTUNGSMASCHINE
DÉBROUSSAILLEUSE

(43) Date of publication of application: 11.04.2012
(73) Proprietor: Husqvarna AB, 561 82 Huskvarna (SE)
(72) Inventor: HALLENDORFF, Johan, S-553 36 Jönköping (SE); THIL, Ola, S-561 42 Huskvarna (SE); CEDERQVIST, Robert, S-578 92 Aneby (SE); HOLMDAHL, Mikael, S-554 66 Jönköping (SE)
(86) International application number: PCT/SE2009/050659
(87) International publication number: WO 2010/140939

(56) References cited:
- DE-A1- 3 216 912
- DE-A1- 4 116 674
- DE-A1-102005 001 843
- DE-A1-102005 001 843
- DE-U1- 29 621 037
- DE-U1- 29 621 037
- DE-U1- 29 908 263
- DE-U1- 29 908 263
- FR-A1- 2 812 068
- US-A- 4 483 070
- US-A- 4 483 070
- US-A- 4 654 971

## Description

### Technical field

The present disclosure relates to a clearing saw, more specifically to a backpack clearing saw. Such clearing saws are generally known, see e.g. DE 32 16 912 A1. The backpack clearing saw comprises a power unit, such as a combustion engine, for driving the clearingsaw, a harness to which the power unit is attached, a bar arrangement attached to the harness, a tube with a working tool, such as a prunerhead with an operating tool attached to it.

The backpack clearing saw further comprises a cord arranged between the bar arrangement and the tube, in order to move the weight of the working tool to the operators back.

### Background

The basic idea of a backpack clearing saw is to move the weight of the machine from the operators side to the center of the operators back.

Usually, backpack clearing saws are quite big, unwieldy and thereby difficult to handle.

Hence, there is a need for an improved backpack clearing saw which is easy to disassemble for transport and assemble for use and which backpack clearing saw is easy to handle and adjust for the operator, also while the operator is carrying the clearing saw.

### Summary of the invention

In order to solve the above problems a clearing saw according to the preamble of claim 1 is provided and which is characterized in that the bar arrangement comprises a lower bar, which lower bar is attached to the harness and an upper bar, to which upper bar the cord is attached, and wherein the upper bar and the lower bar are detachably arranged to each other.

By arranging the clearing saw with a bar arrangement having a lower bar attached to the harness and to which lower bar an upper bar is detachably arranged its is possible to in an easy way disassemble the clearing saw when not in use. By providing a cord that is only attached to the upper bar there is no risk that the cord gets entangled between the parts when they are disassembled.

By providing a clearing saw according to claim 1 a slim machine that actually works better than a conventional clearing saw when advancing in dense forest environments is achieved.

By fixing the lower bar to the harness and providing an upper bar that is detachably arranged to the lower bar, it is possible to detach the upper bar and still keeping the lower bar attached to the harness and carrying it on the back.

In order to get a clearing saw that is easy to transport the bars (upper and lower) need to be easy to disassemble for transport mode and easy to assemble again when using the clearing saw.

The clearing saw becomes very easy to transport in a car or on the back of an operator. The clearing saw also becomes easy to store and is actually smaller than an conventional clearings saw. It is possible for the operator to carry all parts that the backpack clearing saw comprises on the back.

The backpack clearing saw is with advantage equipped with a chainsaw prunerhead instead of a circularsaw prunerhead that is conventional on clearing saws.

By attaching the power unit to the harness in such a way, that the power unit is arranged to be carried on the back of an operator, the weight of the power unit is moved to the back of the operator and thereby is a more ergonomic clearing saw achieved.

By providing a bar connection arranged to detachably arrange the lower bar and the upper bar to each other and wherein the bar connection is arranged to the lower bar, and wherein the bar connection is provided with an attachment part, which attachment part is arranged to be brought into the upper bar, and wherein the upper bar comprises an attachment device arranged to fix the upper bar to the lower bar, a connection between the upper bar and the lower bar is achieved that becomes robust, light and strong. The bar connection has a simple design, which is robust and easy to assemble and disassemble, it includes few parts which results in a light weight construction/design.

By arranging the cord inside the upper bar in such a way that the length of the cord can be adjusted it is very easy to adjust the length of the cord. When the operator wants a shorter line he/she puts the cord to the side of the locking device in the feeding groove, and the elastic line automatically pulls together. Simple and robust design. Low assembly and detail cost. The cord adjustment arrangement allows the operator to adjust the cord length easily while having the backpack clearing saw 1 on his/her back.

By providing a cord connection on the tube, which cord connection is a plastic snap-connection and by arranging the elastic cord in the cord connection by means of a knot on the cord, no hard parts (steel hook) is attached to the cord. Few parts a knot replaces for example a hook. In case the elastic cord is stretched and the operator loosens the cord from the tube or the cord loosens from the tube by mistake, there is a potential risk for the operator to be hit by the cord. Therefore the cord cannot contain any hard parts.

By providing the harness with an arrangment for height adjusting the shoulder straps it is possible to adjust the harness to different operators in an easy way.

By providing the harness with a waistbelt link for adjusting the waistbelt a great flexibility is achieved for the user of the harness when bending from side to side or when he/she operates in a stony or bumpy environment. The arrangement is simple and robust and can be accomplished at low cost and is easy to assemble.

### Brief description of the drawings

In the following, the invention will be described in more detail with reference to a preferred embodiment and the appended drawings.
Fig 1 a schematically illustrates a view from the side of a clearingsaw according to the present invention.
Fig 1b schematically illustrates a view from the side of an operator carrying a clearingsaw according to fig 1.
Fig 2 schematically illustrates a view from the side of the main parts that a clearingsaw according to the present invention comprises.
Fig 3a schematically illustrates a cross-section of a close up view of an upper bar, which is one of the parts that a clearing saw according to the present invention comprises and how a cord is arranged inside the upper bar.
Fig 3b schematically illustrates a close up view of an upper bar, according to one embodiment of the invention, having a guard bar for preventing branches from falling down in the head/face of the operator.
Fig 3c schematically illustrates a close up view of an upper bar according to another embodiment of the invention, without guard bar.
Fig 3d schematically illustrates a close up view of an upper bar according to yet another embodiment of the invention, wherein the guard bar is covered with a safety net.
Fig 4 schematically illustrates a view from the side of a clearing saw, wherein the clearing saw is disassembled into parts for transport.
Fig 5 schematically illustrates a view from the side, wherein the parts shown in fig 4 are arranged in transport mode.
Fig 6a schematically illustrates a view from the side of an operator carrying a clearing saw according to fig 5.
Fig 6b schematically illustrates a view from the side of an operator carrying a clearing saw according to fig 5 and another embodiment of the invention, wherein the cord is used as attachment mean to keep the parts together during transport.
Fig 7 schematically illustrates part of a harness according to the present invention, schematically illustrating the arrangement for height adjusting the shoulder straps and the waistbelt link arrangement.

### Detailed description of one embodiment

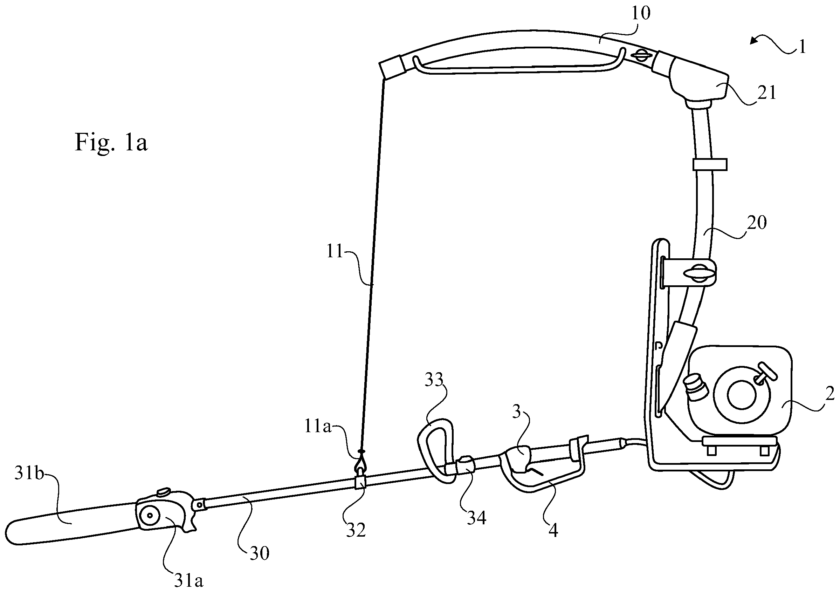

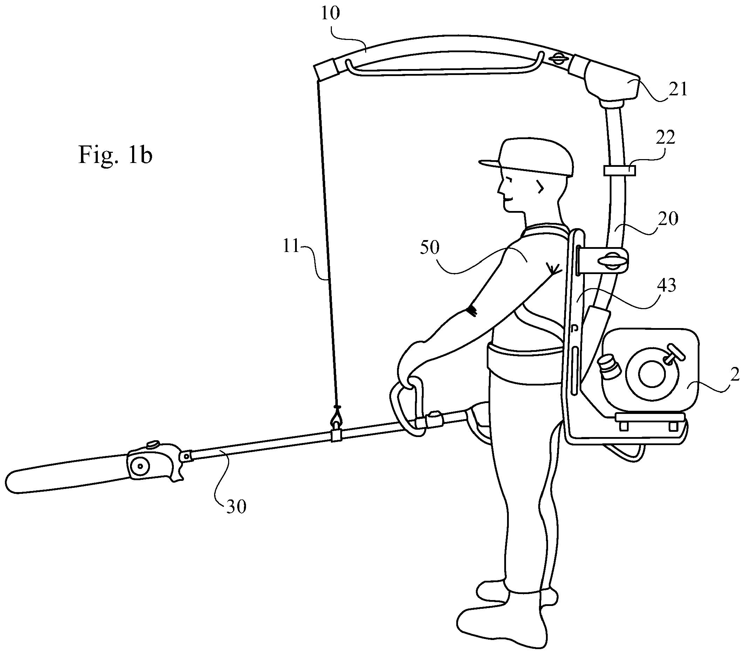

In fig 1 a a clearing saw 1 according to the present invention is shown. The clearing saw according to the present invention is a backpack clearing saw, more précis a backpack chain saw 1 is shown in the figures. By backpack chain saw is meant a clearing saw with a chain saw prunerhead which clearing saw is attached to a harness. The backpack chain saw 1 comprises a power unit 2, such as a combustion engine. It is also possible to use a battery as power unit 2 or other for the purpose suitable power units. A flexible drive shaft 5 leads from the power unit 2 to a trigger handle 3. A protective frame 4 is arranged close to the trigger handle 3 in order to avoid that the trigger handle 3 is pushed by mistake.

The clearing saw further comprises a harness 40 to which the power unit 2 is attached, a bar arrangement 10, 20 attached to the harness 40, a tube 30 with a working tool 31a, 31b, such as a prunerhead 31a, to which a operating tool 31b is arranged. A cord 11 arranged between the bar arrangement 10, 20 and the tube 30, arranged to move the weight of the working tool 31a, 31b to the operators 50 back.

The tube 30 is further arranged with a loop handle 33 and a cord connection 34.

The bar arrangement 10, 20 comprises a lower bar 20, which lower bar 20 is attached to the harness 40 and an upper bar 10, to which upper bar 10 the cord 11 is attached, and wherein the upper bar 10 and the lower bar 20 are detachably arranged to each other. The lower bar 20, the upper bar 10 and the tube 30 are with advantage made of aluminium, plastic or other for the purpose suitable materials.

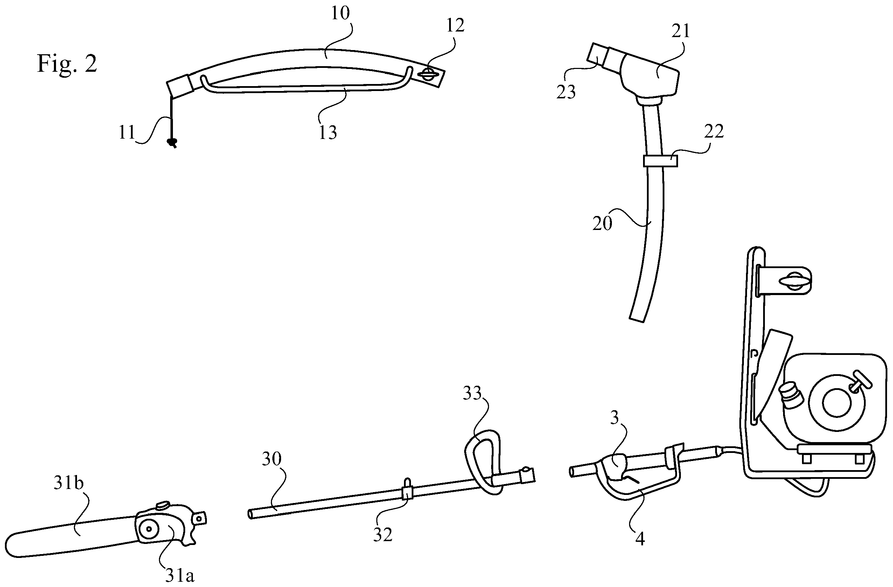

The bar connection 21 is assembled to with two fix bolt (not shown) to the lower bar 20. The upper bar 10 has got a attachment device 12 comprising a rivet nut 12b on the inside and a bolt connected to a knob 12a on the outside, see fig 2. The bar connection 21 has an compatible attachment part 23, arranged to be brought into the upper bar 10 and fixed by means of the attachment device 12. In one embodiment of the invention an opened track (not shown) is arranged at the upper end of the attachment part 23, to make it possible to slide the upper bar 10 with the bolt on top of the connection. When the upper bar 10 is at the bottom position the knob 12a needs to be screwed to the bottom position, the knob 12a then locks the upper bar 10 to connection 21. The knob 12a needs to be screwed up some millimeters, about 4 mm, to be able to disassemble the upper bar 10 from the lower bar 20. In order to get a machine that is easy to transport the bars (upper 10 and lower 20) need to be easy to disassemble for transport mode and easy to assemble again when using the clearingsaw. The connection between the upper bar and the lower bar need to be robust, light and strong.

The cord 11 is the connection between the harness 40 and the tube 30. The cord 11 is preferably elastic. When using an elastic cord 11 there is some space for the operator to choose cord length without doing any adjustments. The cord 11 is partly hidden inside the upper bar 10. A cordlength adjustment arrangement 14, 15, 16, 17 is arranged inside the upper bar 10. The cordlength adjustment arrangement 14, 15, 16, 17 comprises a fixing point 14, a turning point 15, a locking device 16 and a feeding groove 17. The cord 11 is attached to the upper bar 10 in the fixing point 14. The cord 11 is further arranged around the turning point 15, which turning point 15 is arranged inside the upper bar 10. The cord 11 is locked to the locking device 16. In one embodiment the locking device 16 comprises 6 ribbs in a 45 degree angle from the extension of the cord 11 inside the upper bar 10. When the operator wants to elongate the cord 11 he lifts the cord 11 straight up and forward and puts the cord 11 in the feeding groove 17 to the right or to the left of the locking device 16. The operator pulls down the cord 11 to desirable length, before locking the cord 11 again in the locking device 16. Since the cord 11 is elastic and stretched out before locking in the locking device 16 there is a force that wants to shorten the cord 11 once it is released, therefore the operator simply releases the cord 11 and puts the cord 11 in the feeding groove 17 to shorten the cord length.

In order to be able to cut low or to cut low stumps or even branches higher up in the tree it is ideal for the operator if he or she would be able to adjust the cord 11. The cord adjustment arrangement allows the operator to adjust the cord length easily while having the backpack clearing saw 1 on his/her back.

The cord 11 is arranged to the tube 30 by means of a cord connection 32 in form of a snap-in connection and is secured from slipping by a knot 11a on the lower end of the cord 11.

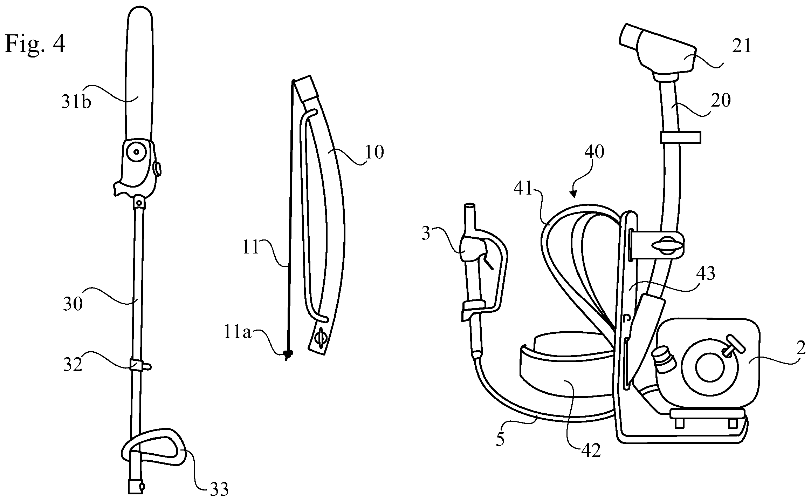

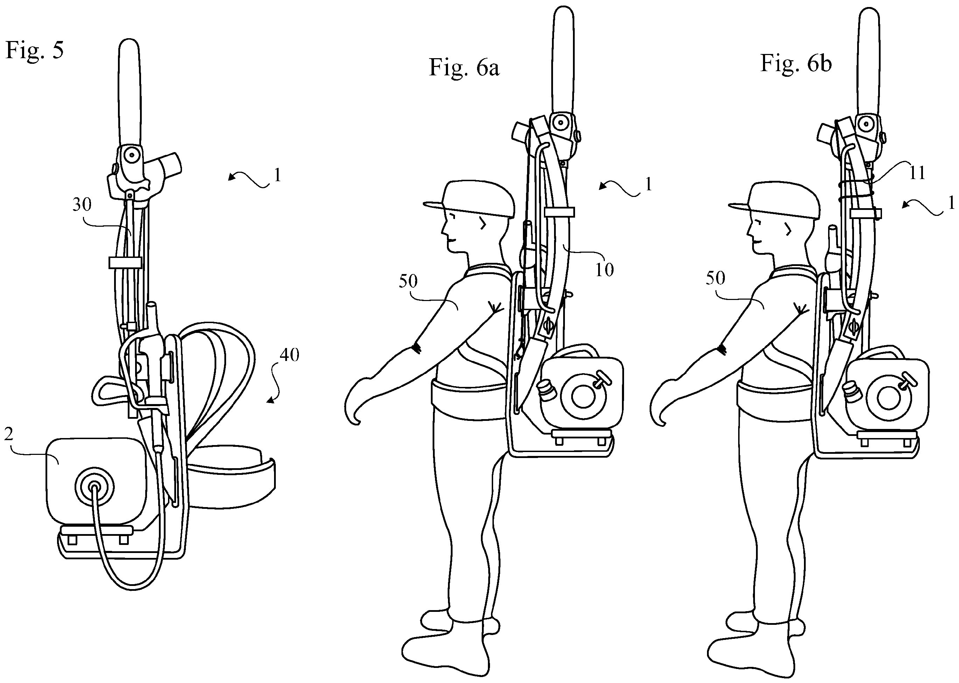

Fig 4, 5 and 6a-6b shows how the upper bar 10 comprising the cord 11 and the tube 30 comprising the working tool 31a, 31b can be detached from the clearing saw 1. The upper bar 10 and the tube 30 can be attached to the harness 40 close to the lower bar 20 by means of the attachment part 22, which can be a snap-in attachment. The cord 11 can be used to attach the upper bar 10 and the tube 30 to the harness 40 and the lower bar 20. In fig 6b is shown how the cord can be used. The back-pack chainsaw 1 needs to be easy to disassemble for transport mode in a car or on the back of the operator when walking from and to a workplace in the forest. The upper bar 10 can be disassembled from the frame/lower bar 20 by simply loosen a knob 12a and the tube 30 can be disassembled from the engine by a quick fit tube connection 32. These parts, the upper bar 10 and the tube 30 can be attached to the back-pack harness 40 by using the elastic cord 11.

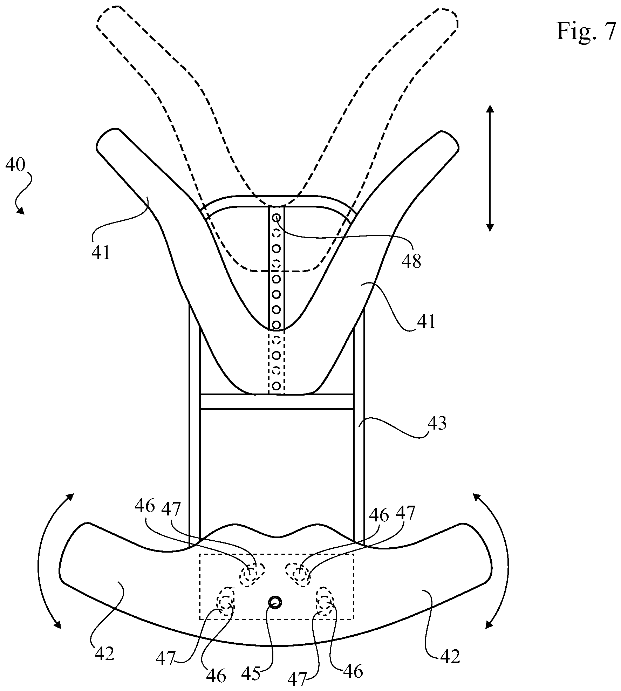

Since different operators have different length of the backs it can be a problem to provide a harness 40 that fits all. Therefore the harness 40 according to the present invention is arranged with a height adjustment of shoulderstraps arrangement 48, see fig 7. The shoulderstarps 41 are arranged to a backplate of plastic material and the backplate is attached to the frame 43 by means of at least one, preferable at least two snap-in attachments and locked with a plastic pin fitting into a hole in the frame 43. The backplate and the shoulderstraps 41 can be adjusted to desireable height on the frame 43.

The operators hips moves while walking and the hips especially moves when the operator operates in a stony or bumpy environment. The harness 40 has therefore been equipped with a link arrangement 45, 46, 47 in the waistbelt 42 that allows the waistbelt 42 to move approximately +/- 8 degrees, see fig 7. This gives the operator more flexibility when operating with the harness 40 of the backpack clearing saw 1. This is possible by having oval shaped tracks 47 in the plastic belt on which the soft waistbelt 42 is attached. The plastic belt is attached to the frame 43 with roles and bolted with bolts 45, 46. The oval shaped holes 47, allows a circular movement of the waistbelt relatively to the frame 43.

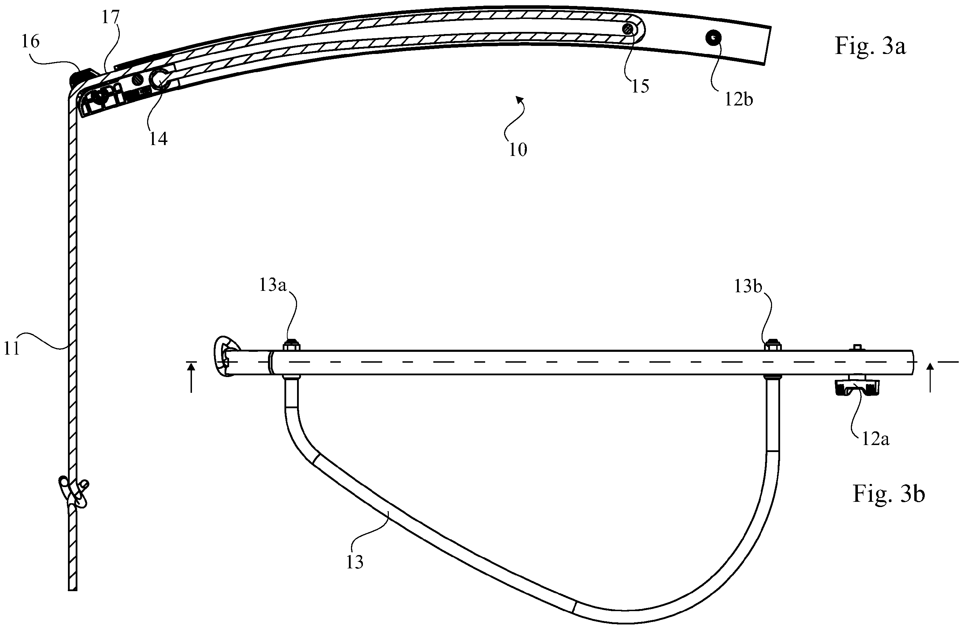

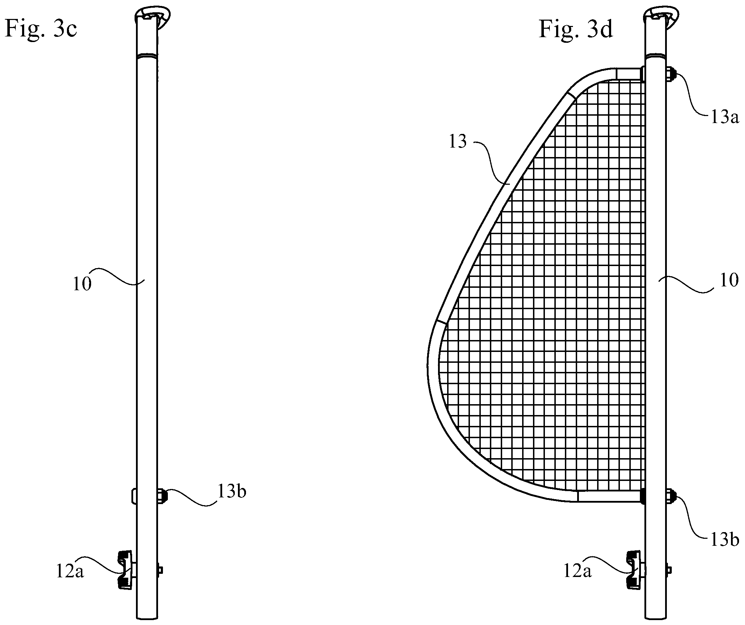

In fig 2, 3b and 3d is a guard bar 13 shown, arranged to prevent branches to fall down in the head/face of the operator 50. The guard bar is attached to the upper bar 10 in to attachment points 13a, 13b. The guard bar 13 can be arranged with a safety net, see fig 3d.

## Claims

1. A clearing saw (1) comprising;
- a power unit (2), such as a combustion engine, for driving the clearing
- saw (1),
- a harness (40) to which the power unit (2) is attached,
- a bar arrangement (10, 20) attached to the harness (40),
- a tube (30) with a working tool (31a, 31b), such as a prunerhead (31a) with an operating tool (31b) attached to the prunerhead (31a),
- a cord (11) arranged between the bar arrangement (10, 20) and
the tube (30), arranged to move the weight of the working tool (31a, 31b) to an operators (50) back, wherein the bar arrangement (10, 20) comprises a lower bar (20) attached to the harness (40) and an upper bar (10), to which the cord (11) is attached, **characterized in that** the low bar (20) has a longitudinal extension in a vertical direction behind and above the operator, and the upper bar (10) has a longitudonal extension in a horizontal direction above and in front of the operator, wherein the upper bar (10) and the lower bar (20) are detachably connected to each other at the point of intersection between the longitudinal extensions of the upper and lower bars (10, 20) by a bar connection (21) arranged at the lower bar (20) and an attachment device (12) arranged at the upper bar (10).

2. The clearing saw (1) according to claim 1, wherein the power unit (2) is attached to the harness (40) in such a way, that the power unit (2) is arranged to be carried on the back of an operator (50).

3. The clearing saw (1) according to claim 1, wherein the bar connection (21) is provided with an attachment part (23), which attachment part (23) is arranged to be brought into the upper bar (10), and wherein the upper bar (10) comprises the attachment device (12) arranged to fix the upper bar (10) to the lower bar (20).

4. The clearing saw (1) according to any of the preceding claims, wherein the cord (11) is elastic.

5. The clearing saw (1) according to any of the preceeding claims, wherein the cord (11) is arranged inside the upper bar (10) and in which upper bar (10) a cordlength adjustment arrangement (14, 15, 16, 17) is arranged in such a way that the length of the cord (11) can be adjusted.

6. The clearing saw (1) according to claim 5, wherein the cord length adjustment arrangement (14, 15, 16, 17) comprises a fixing point (14) for fixing the cord (11) inside the upper bar (10), a turning point (15), around which point (15) the cord (11) is arranged inside the upper bar (10), a feeding groove (17) by means of which feeding groove (17) the cord (11) is pulled out of or into the upper bar (10), and a locking device (16), locking the cord (11) at a required length.

7. The clearing saw (1) according to any of the preceding claims, wherein the clearing saw (1) is a backpack chain saw, with a chain saw (31b) prunerhead (31a) as working tool (31a, 31b).

8. The clearing saw (1) according to any of the preceding claims, wherein a cord connection (32) is arranged on the tube (30), which cord connection (32) is a plastic snap-in connection, and wherein the cord (11) is arranged to be attached to the tube (30) via the cord connection (32).

9. The clearing saw (1) according to any of the preceding claims, wherein the harness (40) having shoulderstraps (41), and wherein the harness (40) is provided with an adjustment device (48) arranged for height adjusting the shoulder straps (41).

10. The clearing saw (1) according to any of the preceeding claims, wherein the harness (40) having a waist belt (42), and wherein the harness (40) is provided with at least one waistbelt link (45,46,47) arranged for adjusting the waistbelt (42).

11. The clearing saw (1) according to any of the preceding claims, wherein the upper bar (10), comprising the cord (11), and the tube (30), comprising the working tool (31a, 31b), are detachably arranged to the rest of the clearing saw (1) in such a way that the operator (50) can detach them while still wearing the harness (40).

12. The clearing saw (1) according to any of the preceding claims, wherein the upper bar (10), comprising the cord (11), and the tube (30), comprising the working tool (31a, 31b), are arranged to be detached before transporting the clearing saw (1), and wherein the upper bar (10) comprising the cord (11) and the tube (30), comprising the working tool (31a, 31b), are arranged to be attached to the harness (40) in such a way that the operator (50) can carry all parts of the clearing saw (1) on the back while transporting the clearing saw (1).

13. The clearing saw (1) according to claims 1- 12, **characterized in that** the harness (40) provided with shoulderstarps (41) arranged to a backplate of plastic material and the backplate is attached to a frame (43) by means of at least one snap-in attachment and locked with a plastic pin fitting into a hole in the frame (43) height on the frame (43).

14. The clearing saw (1) according to claims 1- 13, **characterized in that** the backplate and the shoulderstraps (41) can be adjusted to desireable height on the frame (43).

15. The clearing saw (1) according to any of claims 1-14, **characterized i n** that the the harness (40) provided with an arrangement (48) for height adjusting the shoulder straps (41) to adjust the harness (40) to different operators.

16. The clearing saw (1) according to claims 10 4 -15, **characterized in that** the harness (40) comprises a link arrangement (45, 46, 47) in the waistbelt (42) that allows the waistbelt (42) to move approximately +/- 8 degrees.

17. The clearing saw (1) according to claims 10 -16, **characterized in that** the harness (40) comprises the frame (43), a plastic belt is attached to the frame (43) and provided with oval shaped holes (47); the soft waistbelt (42) is attached to the plastic belt with holes and bolted with bolts (45, 46), wherein the oval shaped holes (47) allow a circular movement of the waistbelt (42) relatively to the frame (43).

## Patentansprüche

1. Freischneidsäge (1) umfassend:
- eine Antriebseinheit (2), etwa einen Verbrennungsmotor, zum Antreiben der Freischneidsäge (1),
- ein Tragegeschirr (40), an dem die Antriebseinheit (2) befestigt ist,
- eine Stangenanordnung (10, 20), die an dem Tragegeschirr (40) befestigt ist,
- ein Rohr (30) mit einem Arbeitswerkzeug (31a, 31b), etwa einem Beschneidkopf (31a) mit einem Betätigungswerkzeug (31b), das an dem Beschneidkopf (31a) befestigt ist,
- ein Seil (11), das zwischen der Stangenanordnung (10, 20) und dem Rohr (30) angeordnet ist, um das Gewicht des Arbeitswerkzeugs (31a, 31b) auf den Rücken der Bedienperson (50) zu verlagern, wobei die Stangenanordnung (10, 20) eine untere Stange (20), die an dem Tragegeschirr (40) befestigt ist, und eine obere Stange (10) umfasst, an welcher das Seil (11) befestigt ist,
**dadurch gekennzeichnet, dass** die untere Stange (20) eine Längserstreckung in einer vertikalen Richtung hinter und über der Bedienperson aufweist, und die obere Stange (10) eine Längserstreckung in einer horizontalen Richtung über und vor der Bedienperson aufweist,
wobei die obere Stange (10) und die untere Stange (20) an dem Schnittpunkt zwischen den Längserstreckungen der oberen und unteren Stangen (10, 20) durch eine Stangenverbindung (21), die an der unteren Stange (20) angeordnet ist, und eine Befestigungsvorrichtung (12), die an der oberen Stange (10) angeordnet ist, abnehmbar miteinander verbunden sind.

2. Freischneidsäge (1) nach Anspruch 1, wobei die Antriebseinheit (2) an dem Tragegeschirr (40) auf solche Weise befestigt ist, dass die Antriebseinheit (2) angeordnet ist, um auf dem Rücken einer Bedienperson (50) getragen zu werden.

3. Freischneidsäge (1) nach Anspruch 1, wobei die Stangenverbindung (21) mit einem Befestigungsteil (23) versehen ist, wobei der Befestigungsteil (23) angeordnet ist, um in die obere Stange (10) eingebracht zu werden, und wobei die obere Stange (10) eine Befestigungsvorrichtung (12) umfasst, die dazu angeordnet ist, die obere Stange (10) an der unteren Stange (20) zu fixieren.

4. Freischneidsäge (1) nach einem der vorhergehenden Ansprüche, wobei das Seil (11) elastisch ist.

5. Freischneidsäge (1) nach einem der vorhergehenden Ansprüche, wobei das Seil (11) innerhalb der oberen Stange (10) angeordnet ist, und wobei in der oberen Stange (10) eine Seillängen-Einstellungsanordnung (14, 15, 16, 17) auf solche Weise angeordnet ist, dass die Länge des Seils (11) eingestellt werden kann.

6. Freischneidsäge (1) nach Anspruch 5, wobei die Seillängen-Einstellungsanordnung (14, 15, 16, 17) einen Fixierungspunkt (14) zur Fixierung des Seils (11) innerhalb der oberen Stange (10), einen Drehpunkt (15), um welchen (15) das Seil (11) innerhalb der oberen Stange (10) angeordnet ist, eine Zuführnut (17), mittels welcher (17) das Seil (11) aus der oder in die obere Stange (10) hinein gezogen wird, und eine Sperrvorrichtung (16) umfasst, die das Seil (11) bei einer erforderlichen Länge blockiert.

7. Freischneidsäge (1) nach einem der vorhergehenden Ansprüche, wobei die Freischneidsäge (1) eine Rucksack-Kettensäge ist, mit einem Beschneidkopf (31a) der Kettensäge (31b) als Arbeitswerkzeug (31a, 31b).

8. Freischneidsäge (1) nach einem der vorhergehenden Ansprüche, wobei eine Seilverbindung (32) an dem Rohr (30) angeordnet ist, wobei die Seilverbindung (32) eine Einschnappverbindung aus Kunststoff ist, und wobei das Seil (11) so angeordnet ist, dass es an dem Rohr (30) über die Seilverbindung (32) befestigt werden kann.

9. Freischneidsäge (1) nach einem der vorhergehenden Ansprüche, wobei das Tragegeschirr (40) Schulterriemen (41) umfasst, und wobei das Tragegeschirr (40) mit einer Einstellvorrichtung (48) versehen ist, die zur Höhenverstellung der Schulterriemen (41) angeordnet ist.

10. Freischneidsäge (1) nach einem der vorhergehenden Ansprüche, wobei das Tragegeschirr (40) einen Bauchgurt (42) umfasst, und wobei das Tragegeschirr (40) mit zumindest einer Bauchgurtverbindung (45, 46, 47) versehen ist, die dazu angeordnet ist, den Bauchgurt (42) einzustellen.

11. Freischneidsäge (1) nach einem der vorhergehenden Ansprüche, wobei die obere Stange (10), die das Seil (11) umfasst, und das Rohr (30), das das Arbeitswerkzeug (31a, 31b) umfasst, abnehmbar am verbleibenden Teil der Freischneidsäge (1) auf solche Weise angeordnet sind, dass die Bedienperson (50) sie abnehmen kann, während sie das Tragegeschirr (40) noch trägt.

12. Freischneidsäge (1) nach einem der vorhergehenden Ansprüche, wobei die obere Stange (10), die das Seil (11) umfasst, und das Rohr (30), das das Arbeitswerkzeug (31a, 31b) umfasst, so angeordnet sind, dass sie vor dem Transport der Freischneidsäge (1) abgenommen werden, und wobei die obere Stange (10), die das Seil (11) umfasst, und das Rohr (30), das das Arbeitswerkzeug (31a, 31b) umfasst, so angeordnet sind, dass sie an dem Tragegeschirr (40) auf solche Weise befestigt werden, dass die Bedienperson (50) alle Teile der Freischneidsäge (1) auf dem Rücken tragen kann, während die Freischneidsäge (1) transportiert wird.

13. Freischneidsäge (1) nach den Ansprüchen 1- 12, **dadurch gekennzeichnet, dass** das Tragegeschirr (40) mit Schulterriemen (41) versehen ist, die an einer Rückenplatte aus Kunststoffmaterial angeordnet sind, und dass die Rückenplatte an einem Rahmen (43) mittels zumindest einer Einschnappverbindung verbunden und mit einem Kunststoffstift, der in ein Loch in dem Rahmen (43) passt, in seiner Höhe an dem Rahmen (43) gesichert ist.

14. Freischneidsäge (1) nach den Ansprüchen 1-13, **dadurch gekennzeichnet, dass** die Rückenplatte und die Schulterriemen (41) auf eine gewünschte Höhe an dem Rahmen (43) eingestellt werden können.

15. Freischneidsäge (1) nach einem der Ansprüche 1-14, **dadurch gekennzeichnet, dass** das Tragegeschirr (40) mit einer Anordnung (48) zur Höheneinstellung der Schulterriemen (41) versehen ist, um das Tragegeschirr (40) an unterschiedliche Bedienpersonen anzupassen.

16. Freischneidsäge (1) nach den Ansprüchen 10-15, **dadurch gekennzeichnet, dass** das Tragegeschirr (40) eine Verbindungsanordnung (45, 46, 47) in dem Bauchgurt (42) umfassen, die es erlaubt, den Bauchgurt (42) um ungefähr +/- 8 Grad zu verschieben.

17. Freischneidsäge (1) nach den Ansprüchen 10 -16, **dadurch gekennzeichnet, dass** das Tragegeschirr (40) den Rahmen (43) umfasst, ein Kunststoffgurt an dem Rahmen (43) befestigt und mit oval geformten Öffnungen (47) versehen ist; der weiche Bauchgurt (42) an dem Kunststoffgurt mit Öffnungen befestigt ist und mit Schrauben (45, 46) verschraubt ist, wobei die oval geformten Öffnungen (47) eine kreisförmige Bewegung des Bauchgurts (42) relativ zu dem Rahmen (43) ermöglichen.

## Revendications

1. Débroussailleuse (1) comprenant :
- une unité d'alimentation (2), telle qu'un moteur à combustion, pour entraîner la débroussailleuse (1),
- un harnais (40) auquel l'unité d'alimentation (2) est fixée,
- un agencement de barres (10, 20) fixé au harnais (40),
- un tube (30) avec un outil de travail (31a, 31b), tel qu'une tête d'élagage (31a) avec un outil d'actionnement (31b) fixé à la tête d'élagage (31a),
- un cordon (11) agencé entre l'agencement de barres (10, 20) et le tube (30), agencé pour déplacer le poids de l'outil de travail (31a, 31b) au dos de l'opérateur (50), où l'agencement de barres (10, 20) comprend une barre inférieure (20) fixée au harnais (40) et une barre supérieure (10), à laquelle le cordon (11) est fixé,
**caractérisée en ce que** la barre inférieure (20) a une extension longitudinale dans une direction verticale derrière et au-dessus de l'opérateur, et la barre supérieure (10) a une extension longitudinale dans une direction horizontale au-dessus et en face de l'opérateur, où la barre supérieure (10) et la barre inférieure (20) sont reliées de manière amovible l'une à l'autre au point d'intersection entre les extensions longitudinales des barres supérieure et inférieure (10, 20) par un raccord de barres (21) agencé au niveau de la barre inférieure (20) et un dispositif de raccordement (12) agencé au niveau de la barre supérieure (10).

2. Débroussailleuse (1) selon la revendication 1, dans laquelle l'unité d'alimentation (2) est fixée au harnais (40) de manière à ce que l'unité d'alimentation (2) soit agencée pour être portée sur le dos d'un opérateur (50).

3. Débroussailleuse (1) selon la revendication 1, dans laquelle le raccord de barres (21) est muni d'une partie de raccordement (23), laquelle partie de raccordement (23) est agencée pour être amenée dans la barre supérieure (10) et dans laquelle la barre supérieure (10) comprend le dispositif de raccordement (12) agencé pour fixer la barre supérieure (10) à la barre inférieure (20).

4. Débroussailleuse (1) selon l'une des revendications précédentes, dans laquelle le cordon (11) est élastique.

5. Débroussailleuse (1) selon l'une des revendications précédentes, dans laquelle le cordon (11) est agencé à l'intérieur de la barre supérieure (10) et dans cette barre supérieure (10), un agencement de réglage de longueur de cordon (14, 15, 16, 17) est agencé de manière à ce que la longueur du cordon (11) puisse être réglée.

6. Débroussailleuse (1) selon la revendication 5, dans laquelle l'agencement de réglage de longueur de cordon (14, 15, 16, 17) comprend un point de fixation (14) pour fixer le cordon (11) à l'intérieur de la barre supérieure (10), un point de retour (15), autour de ce point (15), le cordon (11) est agencé à l'intérieur de la barre supérieure (10), une rainure d'alimentation (17) au moyen de cette rainure d'alimentation (17), le cordon (11) est tiré de ou dans la barre supérieure (10), et un dispositif de verrouillage (16), verrouillant le cordon (11) à une longueur requise.

7. Débroussailleuse (1) selon l'une des revendications précédentes, dans laquelle la débroussailleuse (1) est une scie à chaîne dorsale, avec une tête d'élagage (31a) de scie à chaîne (31b) en tant qu'outil de travail (31a, 31b).

8. Débroussailleuse (1) selon l'une des revendications précédentes, dans laquelle un raccord de cordon (32) est agencé sur le tube (30), lequel raccord de cordon (32) est un raccord par encliquetage en plastique, et dans laquelle le cordon (11) est agencé pour être fixé au tube (30) par l'intermédiaire du raccord de cordon (32).

9. Débroussailleuse (1) selon l'une des revendications précédentes, dans laquelle le harnais (40) a des bretelles (41), et dans laquelle le harnais (40) est muni d'un dispositif de réglage (48) agencé pour régler la hauteur des bretelles (41).

10. Débroussailleuse (1) selon l'une des revendications précédentes, dans laquelle le harnais (40) a une ceinture (42), et dans laquelle le harnais (40) est muni d'au moins une liaison de ceinture (45, 46, 47) agencée pour régler la ceinture (42).

11. Débroussailleuse (1) selon l'une des revendications précédentes, dans laquelle la barre supérieure (10), comprenant le cordon (11), et le tube (30), comprenant l'outil de travail (31a, 31b), sont agencés de manière amovible sur le reste de la débroussailleuse (1) de manière à ce que l'opérateur (50) puisse les détacher tout en continuant de porter le harnais (40).

12. Débroussailleuse (1) selon l'une des revendications précédentes, dans laquelle la barre supérieure (10), comprenant le cordon (11), et le tube (30), comprenant l'outil de travail (31a, 31b), sont agencés pour être détachés avant de transporter la débroussailleuse (1), et dans laquelle la barre supérieure (10) comprenant le cordon (11) et le tube (30), comprenant l'outil de travail (31a, 31b), sont agencés pour être fixés au harnais (40) de manière à ce que l'opérateur (50) puisse porter toutes les parties de la débroussailleuse (1) sur le dos tout en transportant la débroussailleuse (1).

13. Débroussailleuse (1) selon les revendications 1 à 12, **caractérisée en ce que** le harnais (40) est muni de bretelles (41) agencées sur une plaque arrière en matière plastique et la plaque arrière est fixée à un cadre (43) au moyen d'au moins un raccordement par encliquetage et verrouillée avec un ajustement de goupille en plastique dans un trou dans la hauteur de cadre (43) sur le cadre (43).

14. Débroussailleuse (1) selon les revendications 1 à 13, **caractérisée en ce que** la plaque arrière et les bretelles (41) peuvent être réglées à une hauteur souhaitable sur le cadre (43).

15. Débroussailleuse (1) selon l'une des revendications 1 à 14, **caractérisée en ce que** le harnais (40) est muni d'un agencement (48) pour régler la hauteur des bretelles (41) afin de régler le harnais (40) à différents opérateurs.

16. Débroussailleuse (1) selon les revendications 10 à 15, **caractérisée en ce que** le harnais (40) comprend un agencement de liaison (45, 46, 47) dans la ceinture (42) qui permet à la ceinture (42) de se déplacer d'environ +/-8 degrés.

17. Débroussailleuse (1) selon les revendications 10 à 16, **caractérisée en ce que** le harnais (40) comprend le cadre (43), une ceinture en plastique est fixée au cadre (43) et munie de trous de forme ovale (47) ; la ceinture souple (42) est fixée à la ceinture en plastique avec des trous et boulonnée avec des boulons (45, 46), où les trous de forme ovale (47) permettent un mouvement circulaire de la ceinture (42) par rapport au cadre (43).
